(19) Europäisches Patentamt

European Patent Office

Office européen des brevets

(11) Veröffentlichungsnummer: **0 203 263 B1**

# (12) EUROPÄISCHE PATENTSCHRIFT

(45) Veröffentlichungstag der Patentschrift: **15.04.92**

(21) Anmeldenummer: **86101943.8**

(22) Anmeldetag: **15.02.86**

(51) Int. Cl.⁵: **H02G 3/06**

(54) **Kabelverschraubung mit einem Klemmeinsatz und einer Dichtung.**

(30) Priorität: **25.05.85 DE 3519032**

(43) Veröffentlichungstag der Anmeldung:
**03.12.86 Patentblatt 86/49**

(45) Bekanntmachung des Hinweises auf die
Patenterteilung:
**15.04.92 Patentblatt 92/16**

(84) Benannte Vertragsstaaten:
**CH DE FR GB IT LI**

(56) Entgegenhaltungen:
**DE-A- 3 104 974**
**FR-A- 2 358 766**
**US-A- 4 544 800**

(73) Patentinhaber: **Anton Hummel Verwaltungs-GmbH**
**Mozartstrasse 2**
**W-7808 Waldkirch(DE)**

(72) Erfinder: **Gehring, Peter**
**Eichhofweg**
**W-7809 Simonswald-Griesbach(DE)**

(74) Vertreter: **Schmitt, Hans, Dipl.-Ing. et al**
**Patentanwälte Dipl.-Ing H. Schmitt Dipl.-Ing.**
**W. Maucher Dreikönigstrasse 13**
**W-7800 Freiburg(DE)**

EP 0 203 263 B1

**Beschreibung**

Die Erfindung betrifft eine Kabelverschraubung mit einer Schraubhülse gemäß dem Oberbegriff des Patentanspruches 1.

Eine derartige Kabelverschraubung ist aus der FR-A-2 358 766 und der DE-A-3 104 974 bekannt. Dabei stützt sich die Dichtung mit ihrer der Gegenhülse abgewandten Stirnseite an einem sich teils radial, teils axial in das Innere der Schraubhülse erstreckenden Absatz ab, der also vom Inneren der Schraubhülse nach außen hin schräg abfallend vertieft ist. Somit wird die Dichtung bei ihrer axialen Druckbeaufschlagung durch das Verschrauben gegen diesen Absatz gedrückt und soll am Abrutschen gehindert werden.

Da die Dichtung jedoch gleichzeitig gestaucht wird, radial nach außen aber wegen der sie umgebenden Schraubhülse nicht ausweichen kann, besteht bei starken axialen Druckkräften die Gefahr, daß die Dichtung schon bei der Montage des Kabels trotz der schrägen Gestaltung des Absatzes radial nach innen verformt wird und im Laufe der Zeit zwischen Schraubhülse und Kabel davonkriechen kann. Mit Sicherheit ist nachgewiesen, daß bei Druckbelastung durch Luft oder Wasser, wodurch eine allseitige radiale Druckbelastung auf die Dichtung wirksam wird, die Dichtung von ihrer stirnseitigen Auflage nach innen weggedrückt wird, selbst wenn diese Auflage radial nach innen ansteigt bzw. nach außen schräg abfallend vertieft ausgebildet ist. Längstens nach einem Tag hat ein Dichtungseinsatz, welcher über seine ganze Länge gestaucht und stirnseitig gegen einen derartigen schrägen Absatz gedrückt wird, einem radialen Luft- oder Wasserdruck nachgebend auch eine solche schräg ansteigende Fläche überwunden. Die durch die axiale Stauchung vorhandene Bereitschaft des Dichtungseinsatzes, etwa in der Mitte seiner Länge nach innen aufbauchend auszuweichen, wie es Fig.5 der FR-A-2 358 766 illustriert, wird von einem radialen Luft- oder Wasserdruck verstärkt, so daß der Werkstoff verhältnismäßig schnell davonkriecht und auch eine ansteigende Auflagefläche eines teilweise axial orientierten Absatzes überwindet, so daß die Dichtung zumindest teilweise von einem solchen Absatz abrutscht.

Bei den vorbekannten Kabelverschraubungen wird also die Dichtung an ihrem der Gegenhülse entgegengesetzten Ende nicht sicher gehalten und trotz der schrägen Ausbildung des Absatzes nicht gegen ein radiales Wegdrücken gesichert, wenn die Dichtung einer hohen radialen Belastung durch einen entsprechend großen Druck von dem umgebenden Medium her ausgesetzt wird.

Es besteht deshalb die Aufgabe, eine Kabelverschraubung der gattungsgemäßen Art dahingehend zu verbessern, daß die Dichtung nicht nur im Bereich der Gegenhülse, sondern auch an ihrem entgegengesetzten Ende sicher gehalten und gegen ein radiales Wegdrücken gesichert ist, selbst wenn die Dichtung einer hohen radialen Belastung ausgesetzt wird, wie es vor allem dann erforderlich ist, wenn die Kabelverschraubung als druckwasserfeste Leitungseinführung verwendet werden soll, oder wenn zwischen dem Außen- und Innenbereich der Leitungseinführung ein sonstiges Druckgefälle besteht.

Diese Aufgabe wird mit den Merkmalen des kennzeichnenden Teiles des Patentanspruches 1 gelöst.

Selbst bei hohen Radial- und Axialkräften wird durch diese Lösung ein Stauchen und/oder Ausweichen der Dichtung im Bereich ihrer Abstützung radial nach innen mit Sicherheit verhindert, weil dieser Dichtungsbereich von der Haltehülse innen umschlossen und gekammert ist. Ein Verformen nach innen und allmähliches Wegkriechen in einen Spalt zwischen Schraubhülse und Kabel oder Schutzschlauch wird dadurch sicher verhindert. Dabei wird in vorteilhafter Weise ausgenutzt, daß durch den aufzufangenden und abzudichtenden Aussendruck die Dichtungswirkung selbsttätig verstärkt werden kann, da die sich radial aufbauende Druckbelastung den Dichtungseinsatz gleichmäßig und proportional dieser Druckbelastung zunehmend stärker an die Wandung der Haltehülse anpressen kann, so daß die Dichtigkeit proportional zur Druckbelastung ansteigt.

Eine bevorzugte Ausführungsform kann dabei darin bestehen, daß die Haltehülse mit der Schraubhülse einstückig verbunden ist. Es entsteht dann praktisch im Inneren der Schraubhülse zwischen dieser und der Haltehülse eine in axialer Richtung zu der Gegenhülse hin offene Ringnut, in welche die schlauchförmige Dichtung mit einem Ende eingreifen kann.

Der radiale Abstand zwischen der Außenseite der Haltehülse und der Innenseite der Kabelverschraubung kann zumindest bereichsweise der Dikke der Dichtung entsprechen oder unterschreiten, wobei die Ringnut auch konisch sein kann. Dadurch wird die Dichtung schon bei der Montage durch eine Steckverbindung gehalten und bei axialer Belastung in diesem Bereich abdichtend in die Ringnut gepreßt.

Es ist auch möglich, daß die Dichtung im Bereich der Haltehülse einen Absatz aufweist, der gegen die Stirnseite der Haltehülse anliegt, und daß die von diesem Absatz ausgehende Fortsetzung der Dichtung zwischen Haltehülse und Schraubhülse greift. Dadurch wird der eigentliche Dichtungsbereich der Dichtung verdickt oder verstärkt und dennoch der Vorteil der erfindungsgemäßen Haltehülse erzielt, die Dichtung in ihrem stirnseitigen Endbereich axial und radial festzulegen.

Ausgestaltungen der Dichtung im Bereich ihres von der Haltehülse erfaßten Endbereiches und Ausgestaltungen der Haltehülse insbesondere bezüglich der Gestaltung ihrer äußeren Mantelfläche im Zusammenwirken mit der Dichtung sind Gegenstand der Ansprüche 5 bis 9. Je nach Anforderungen können die eine oder andere Maßnahme bei der Formgebung der Haltehülse und der Dichtung ergriffen werden.

Eine abgewandelte Ausführungsform der Erfindung kann darin bestehen, daß die Haltehülse in die Kabelverschraubung einsetzbar und vorzugsweise an einem inneren Absatz der Schraubhülse insbesondere in axialer Richtung formschlüssig festlegbar ist. Eine derartige Haltehülse ist nicht einstückig mit der Schraubhülse verbunden, so daß deren Herstellung relativ einfach ist oder sogar schon vorhandene bekannte Schraubhülsen mit der erfindungsgemäßen Haltehülse nachträglich versehen werden können.

Die nachträglich in die Schraubhülse einsetzbare Haltehülse kann aus Kunststoff bestehen und insbesondere eine von der Dichtung abgewandte Fortsetzung als Isolierhülse haben. Sie erhält dann eine Doppelfunktion, indem sie eine vorzugsweise aus Metall bestehende Schraubhülse zusätzlich nach innen isoliert und gleichzeitig das Abrutschen und Abwandern der Dichtung von der Abstützung in der Schraubhülse verhindert. Zusammen mit der Dichtung ergibt sich dann eine innere Isolierung der Schraubhülse, die erforderlichefalls über deren gesamte Länge geführt sein kann.

Eine derartige Haltehülse bietet außerdem die Möglichkeit, an ihr eine die Dichtung auch an deren Außenseite umgreifende Fortsetzung vorzusehen, die vorzugsweise als Axialschlitze aufweisender Klemmeinsatz ausgebildet sein kann. Auf diese Weise kann dann der Klemmeinsatz und die Haltehülse in einem Stück gefertigt und bei der Montage in die Kabelverschraubung eingesetzt werden.

Bei den vorerwähnten verschiedenen Ausführungsformen kann es vorteilhaft und zweckmäßig sein, wenn der die Dichtung innen übergreifende Randbereich der Haltehülse teilweise unter dem Klemmbereich des die Dichtung außen beaufschlagenden Klemmeinsatzes ragt. Durch dessen radiale Verformung wird dann die Dichtung auch gegenüber der Haltehülse festgeklemmt und festgelegt. Gegebenenfalls könnte sogar die Haltehülse selbst zumindest in ihrem von der Dichtung übergriffenen Bereich durch axiale Schlitze in Klemmzungen oder Klemmfinger aufgeteilt sein. Bei genügender Druckbeaufschlagung kann dann die Dichtung auch in ihrem von der Haltehülse innen übergriffenen Bereich so weit verformt werden, daß diese Klemmfinger und Klemmzungen radial verformt und ihre Schlitze dabei zusammengedrückt werden, so daß die Dichtung in diesem Endbereich nach wie vor geschützt gehalten ist, gleichzeitig aber die Klemmwirkung auf das zu haltende kabel erhöht wird. In diesem Falle erhält die Haltehülse die zusätzliche Funktion eine - vorzugsweise zusätzlichen - Klemmeinsatzes.

Um den Dichteinsatz zusätzlich zu halten bzw. unter Druck zu Kammern kann die Dichtung im Bereich ihrer Abstützung als Formdichtung ausgebildet sein, oder sich bei der Montage als Formdichtung ausbilden, wobei der Klemmeinsatz die Dichtung an einer entsprechenden Ausformung übergreift und in axialer Richtung in den nutenförmigen Ringraum zwischen Haltehülse und Schraubhülse einpreßt und festhält. Entsprechend sicher und fest wird die Dichtung gehalten. Um nun die Dichtigkeit auch auf der entgegengesetzten Seite der Dichtung zu erhalten, wird die Dichtung auf ihrer Stirnseite von den Klemmfingern des Klemmeinsatzes übergriffen, so daß der Dichtwerkstoff nicht mehr davonkriechen kann. Damit das Kabel durch diese Übergreifung nicht beschädigt werden kann, wird die Dichtung maximal dreiviertel ihrer Wandstärke von Klemmfingern übergriffen. Von besonderem Vorteil ist es, wenn der Dichteinsatz im Bereich dieser Übergreifung einen stufenförmigen radial oder schräg abgesetzten Absatz aufweist, welcher mit seinem abgesetzten hülsenförmigen Ansatz durch die Übergreifung des Klemmeinsatzes hindurchführt und auch bei einem Abbiegen des Kabels sich schützend zwischen die Übergreifung des Klemmeinsatzes und die Kabeloberfläche legt, so daß das Kabel nicht beschädigt und der durch die Absetzung gekammerte Dichtwerkstoff auch bei Zugbelastung nicht davonkriechen kann. Vor allem bei Kombination einzelner oder mehrerer der vorbeschriebenen Maßnahmen ergibt sich eine feste und sichere Halterung der als Manschette, Schlauch, Formring od.dgl. ausgebildeten Dichtung an ihrem der Gegenhülse abgewandten Endbereich im Inneren der Schraubhülse, wobei diese Dichtung dort nicht nur abgestützt, sondern auch gegen ein radiales Ausquetschen nach innen gesichert wird. Somit kann die Dichtwirkung insbesondere dann, wenn auch im Bereich der Gegenhülse eine entsprechende Kammerung dieser Dichtung erfolgt, ihre Dichtkräfte über eine sehr lange Zeit aufrechterhalten, da der Dichtungswerkstoff wirkungsvoll an beiden Stirnseiten festgehalten wird. Dabei läßt sich die Druckfestigkeit der gesamten Abdichtung unter Beibehaltung einer leichten und unkomplizierten Bauweise der Kabelverschraubung ganz erheblich erhöhen, ohne den Herstellungsaufwand wesentlich zu vergrößern.

Nachstehend ist die Erfindung mit ihren ihr als wesentlich zugehörenden Einzelheiten anhand der Zeichnung noch näher beschrieben. Es zeigt in zum Teil schematisierter Darstellung:

Fig. 1 einen Teillängsschnitt einer Kabelverschraubung, bei welcher ein Schlauchring als Dichtung von einem Klemmeinsatz und einer Gegenhülse umfaßt und von einer Haltehülse einer Schraubhülse stirnseitig übergriffen ist, wobei der Außenumfang der Haltehülse den Schlauchring radial auslenkt,

Fig. 2 eine der Fig. 1 entsprechende Ausführungsform, bei welcher ein Schlauchring in axialer Richtung unverformt in einem Endbereich von der Haltehülse übergriffen ist,

Fig. 3 bis 5 Form-Dichtungen, die von unterschiedlich ausgebildeten Haltehülsen in einem Endbereich gehalten und übergriffen sind,

Fig. 6 und 7 weitere Beispiele von Form-Dichtungen mit jeweils verschieden gestalteten Haltehülsen und abgewandelten Endbereichen der Dichtungen, die von diesen Haltehülsen übergriffen sind,

Fig. 8 bis 10 Kabelverschraubungen, bei denen die Haltehülse nachträglich als separates Teil eingesetzt und an einem Absatz der Schraubhülse axial abgestützt ist,

Fig. 11 bis 14 Kabelverschraubungen, bei denen Schlauchringdichtungen im Bereich der Haltehülse radial verformt sind und benachbart dazu an mehreren, wenigstens zwei Klemmstellen beaufschlagt werden.

Eine in allen Ausführungsbeispielen mit 1 bezeichnete Kabelverschraubung weist jeweils eine Schraubhülse 2 und eine damit mittels Gewinde 3 verbindbare Gegenhülse 4 auf, in welcher ein durch die axiale Verschraubung der Schraubhülse 2 und Gegenhülse 4 gegen ein im Inneren angeordneten Kabel oder einen Schutzschlauch befindlicher Klemmeinsatz 5 vorzugsweise aus härterem Werkstoff als der Kabelmantel radial zusammenpreßbar ist. Die Gegenhülse 4 übergreift dabei den Klemmeinsatz 5 mit einer vorzugsweise als Konus ausgebildeten Ringfläche 6 an einer Stirnseite 7, so daß beim Anziehen des Gewindes 3 ein mit axialen, an der stirnseitigen Ringfläche 6 mündenden Schlitzen 8 versehene Bereich des Klemmeinsatzes 5 aufgrund der Wirkung der konischen Ausbildung der Ringfläche 6 und der Stirnseite 7 radial gegen das Kabel od.dgl. hin verformt wird. Dabei ist zwischen Klemmeinsatz 5 und Kabel eine Dichtung 9 in Form eines Dichtringes oder einer Dichtmanschette angeordnet und diese Dichtung 9 wird durch die erwähnte radiale Verformung des Klemmeinsatzes 5 an das Kabel angepreßt. Da bei der Verschraubung des Gewindes 3 eine in axialer Richtung wirksame Relativbewegung im Sinne einer Annäherung der Schraubhülse 2 und der Gegenhülse 4 erfolgt, wird die Dichtung 9 zusätzlich axial beaufschlagt und stützt sich deshalb mit ihrer der Gegenhülse 4 abgewandten Stirnseite 10 an einem Absatz bzw. einer Abstützung 11 der Schraubhülse 2 ab.

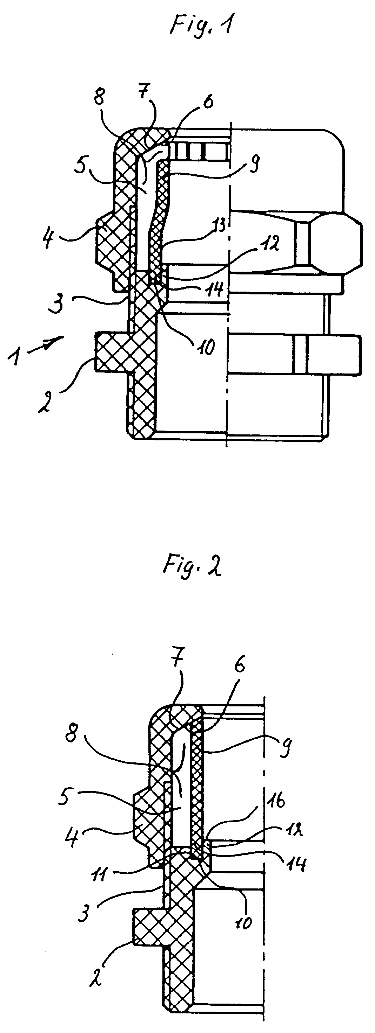

Um bei der erwähnten axialen Beanspruchung der Dichtung 9 und insbesondere bei hohen und starken radialen Druckkräften ein Abrutschen von der Abstützung 11 zu vermeiden, ist bei allen Ausführungsbeispielen vorgesehen, daß die Schraubhülse 2 in ihrem Inneren im Bereich der Abstützung 11 für die Dichtung 9 eine mit ihr verbundene, konzentrische, gegenüber der Abstützung 11 in axialer Richtung vorstehende Haltehülse 12 hat, die die Innenseite 13 des schraubhülsenseitigen Randbereiches 14 der Dichtung 9 übergreift und am Abrutschen von der Abstützung 11 hindert. Man erkennt deutlich in allen Ausführungsbeispielen die Haltehülse 12, die den Randbereich 14 der Dichtung 9 im Inneren über eine gewisse Länge übergreift und so bei axialer Druckbeaufschlagung an einer radialen Verformung nach innen hindert. Somit kann weder ein teilweises noch vollständiges Abrutschen von der Abstützung 11 erfolgen, was insbesondere dann der Fall wäre, wenn das Kabel mit seiner Außenabmessung an der untersten Grenze läge, die von der Kabelverschraubung 1 noch erfaßt werden kann und ein bestimmter Luft- oder Wasserdruck sich über die Schlitze des Klemmeinsatzes aufbauend in radialer Richtung wirksam wird. Der Dichteinsatz wird unter solchen Bedingungen auch dann von der Abstützung 11 nach innen weggedrückt, wenn diese Abstützung 11 in ihrer Auflagefläche nicht plan sondern schräg ausgeführt ist, so daß ein Hohlraum entsteht. In den Ausführungsbeispielen nach den Figuren 1 bis 7 und 11 bis 14 ist die Haltehülse 12 mit der Schraubhülse 2 einstückig verbunden. Dies bietet sich sowohl bei einer Schraubhülse 2 aus Kunststoff als auch aus Metall an und erhöht deren Herstellungsaufwand praktisch nicht.

Bei den Ausführungsbeispielen nach Fig. 1,2,4,8 sowie 11 bis 13 entspricht der radiale Abstand zwischen der Außenseite der Haltehülse 12 und der Innenseite der Kabelverschraubung 1 zumindest bereichsweise der Dicke der Dichtung 9 in ihrem Endbereich 14. Dieser Endbereich 14 wird bei den erwähnten Ausführungsbeispielen somit gleichermaßen innen und außen umfaßt und entsprechend sicher gehalten. Dabei kann bei axialer Beaufschlagung eine zunächst lockere Steckverbindung durch die Stauchung der Dichtung 9 zu einer entsprechend festen Verbindung werden.

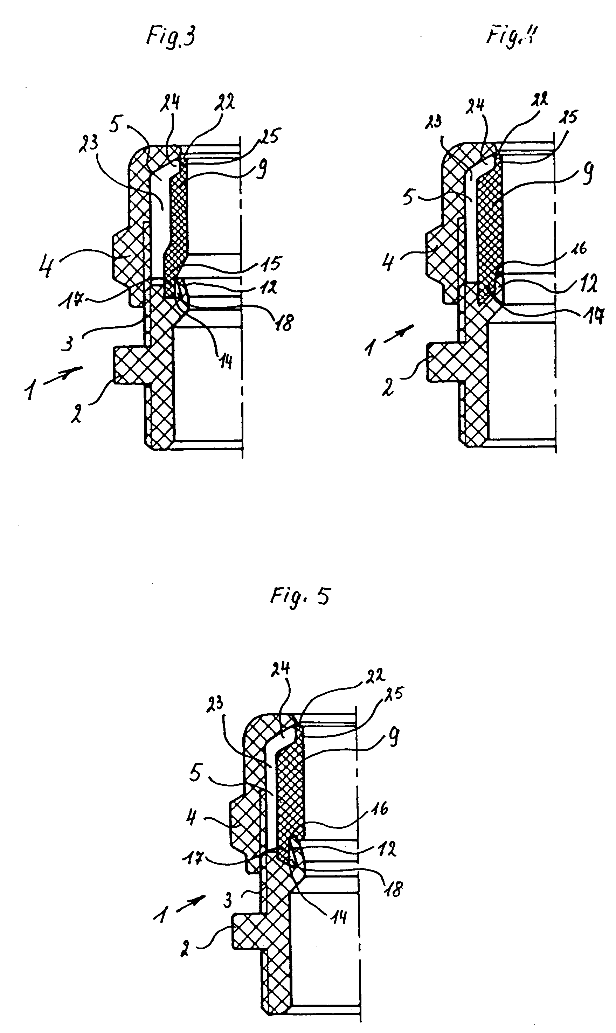

Während in den Ausführungsbeispielen gemäß Fig.1,2 sowie 11 bis 14 Schlauchringe als Dichtung 9 vorgesehen sind, deren Querschnitt über die gesamte axiale länge im wesentlichen gleich bleibt, zeigen die Figuren 3 bis 9 Ausführungsbeispiele, bei denen die Dichtung 9 im Bereich der Haltehülse 12 einen Absatz 15 aufweist, der gegen die Stirnseite 16 der Haltehülse 12 anliegen kann, und daß die von diesem Absatz 15 ausgehende Fortsetzung 17 der Dichtung 9 zwischen Haltehülse 12 und Schraubhülse 2 greift. Dadurch wird die Dichtung 9 noch besser in axialer Richtung abgestützt und kann insbesondere in ihrem nicht die Haltehülse 12 hintergreifenden Bereich eine größere Dicke haben, wenn dies für eine größere Toleranz beim Erfassen unterschiedlich dicker Kabel erwünscht ist oder entsprechend hohe Dichtungsdrücke aufgebracht werden sollen.

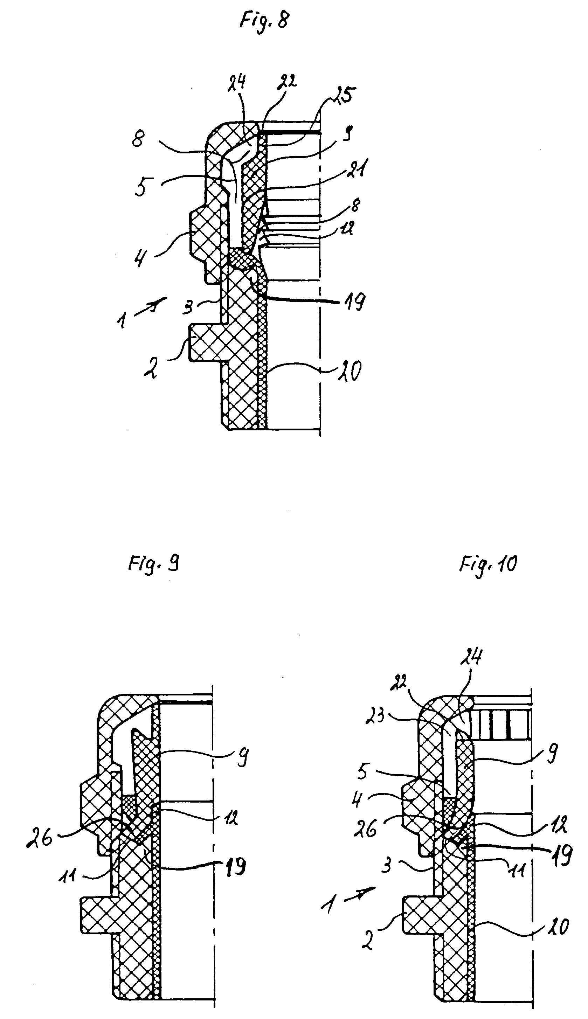

Fig. 10 ist ein Beispiel dafür, daß die Dichtung 9 über ihre gesamte Länge, wie auch bei dem Ausführungsbeispiel nach Fig. 2, im wesentlichen einen gleichbleibenden ringförmigen Querschnitt haben kann. Zusätzlich ist dabei in diesem Ausführungsbeispiel die Dichtung 9 im Bereich der Haltehülse 12 radial nach außen aufgeweitet. Sie erhält dann bei axialer Beaufschlagung in diesem Bereich sogar eine nach außen gerichtete Komponente, die also von dem inneren Ringspalt zwischen Haltehülse 12 und Kabel weggerichtet ist.

Sowohl die vorerwähnte Fig. 10 als aber auch die Figuren 3,5,6,7,13 und 14 zeigen, daß der Außenmantel der Haltehülse 12 konisch sein kann.

Gemäß Fig. 3 und 5 bis 7 steigt dabei die radial äußere, die Dichtung 9 untergreifende Mantelfläche der Haltehülse 12 von ihrem Ansatz bzw. dem Abstützbereich 11 für die Dichtung 9 ausgehend von innen nach außen von einem kleineren zu einem größeren Durchmesser an. Bei den Figuren 3, 5 und 6 ist dabei zwischen der Schraubhülse 2 und der Haltehülse 12 eine sich zur Abstützung der Dichtung 9 erweiternde ringförmige Kammer 18 gebildet. In diese sich erweiternde Kammer 18 kann sich der Endbereich 14 der Dichtung 9 bei axialer Beaufschlagung hineinverformen, um eine noch bessere Verankerung zu ergeben.

Bei den Figuren 9, 10 und 14 verkleinert sich der Außendurchmesser der Haltehülse 12 von der Abstützung 11 der Dichtung 9 ausgehend. Dies ergibt die schon erwähnte von dem Spalt zwischen Hülse 12 und Kabel wegführende Komponente bei axialer Beaufschlagung der Dichtung 9.

Es sei noch erwähnt, daß Fig. 7 ein Beispiel dafür ist, daß die Außenseite der Haltehülse 12 in beiden Richtungen konisch verlaufen kann, indem sie zunächst von der Abstützung 11 ausgehend ihren Durchmesser verkleinert und dann wieder vergrößert.

Fig. 8 bis 10 zeigt Möglichkeiten, die Haltehülse 12 nachträglich in die Kabelverschraubung 1 einsetzbar vorzusehen und vorzugsweise an einem inneren Absatz 19 der Schraubhülse 2 insbesondere in axialer Richtung formschlüssig festzulegen. Diese Lösung bietet sich an, wenn die Schraubhülse aus Metall besteht, zusätzlich aber die Haltehülse 12 zur inneren Isolierung der Schraubhülse dienen soll. Dies ist bei allen drei Ausführungsbeispielen dadurch realisiert, daß die Haltehülse 12 eine von der Dichtung 9 abgewandte Fortsetzung als Isolierhülse 20 hat, die in axialer Richtung bis zu dem der Gegenhülse 4 abgewandten Ende der Schraubhülse 2 reicht.

Diese nachträglich einsetzbare Haltehülse 12 erfüllt also eine Doppelfunktion, indem sie einerseits die Innenseite des stirnseitigen Randbereiches 14 der Dichtung 9 übergreift und sichert und andererseits die Innenseite der Schraubhülse 2 isoliert. Eine ganz spezielle Ausgestaltung zeigt dabei Fig. 8, bei welcher die Haltehülse 12 mit Schlitzen 8 versehen eine die Dichtung 9 auch an deren Außenseite umgreifende Fortsetzung 21 hat, die dabei gleichzeitig als Axialschlitze 8 aufweisender Klemmeinsatz 5 ausgebildet ist. Praktisch ist in diesem Falle die Haltehülse 12 als ein zusätzlicher Klemmeinsatz 5 einstückig mit dem Klemmeinsatz 5 verbunden, was schon eine vorteilhafte Ausgestlatung der Erfindung sein kann. Zusätzlich ist dann noch die Isolierhülse 20 angeformt. Somit kann mit einem einzigen Einsatzteil die Kabelverschraubung 1 gemäß Fig. 8 mit zwei Klemmeinsätzen 5, Haltehülse 12 und Isolierhülse 20 versehen werden.

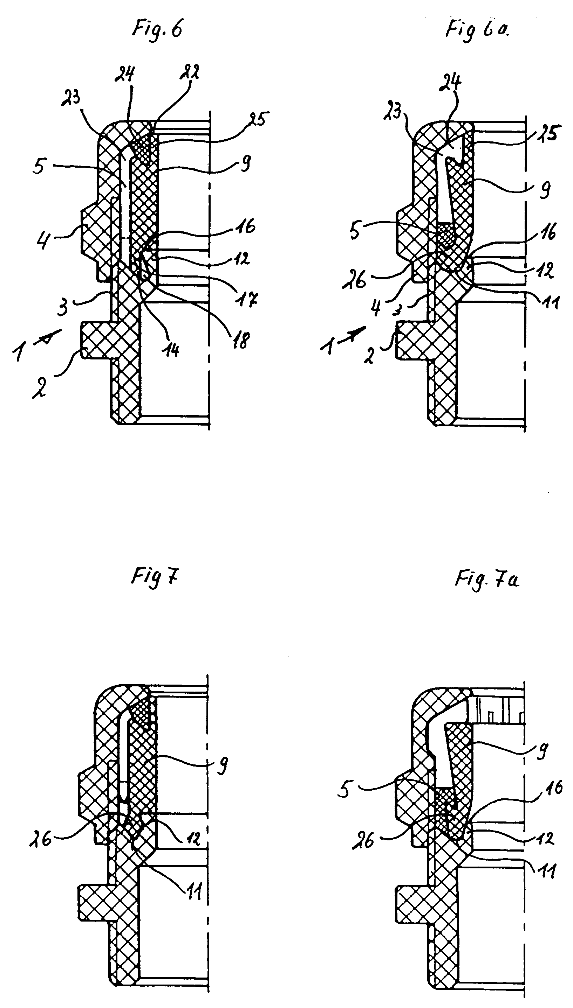

Eine andere Möglichkeit ist beispielsweise in Fig. 6 bis 7a, 9 und 10 oder 14 angedeutet. In diesem Falle ragt der die Dichtung 9 übergreifende Randbereich der Haltehülse 12 teilweise unter den Klemmbereich des die Dichtung 9 auf seiner sich nach außen erstreckenden ringförmigen Erweiterung 26 beaufschlagenden Klemmeinsatzes 5, also in den Bereich des entsprechend zur ringförmigen Erweiterung 26 geformten Klemmeinsatzes 5, in den auch die Schlitze 8 ragen. Dadurch wird die Dichtung auch an der Außenseite der Haltehülse 12 angedrückt und dadurch besser gekammert und gehalten.

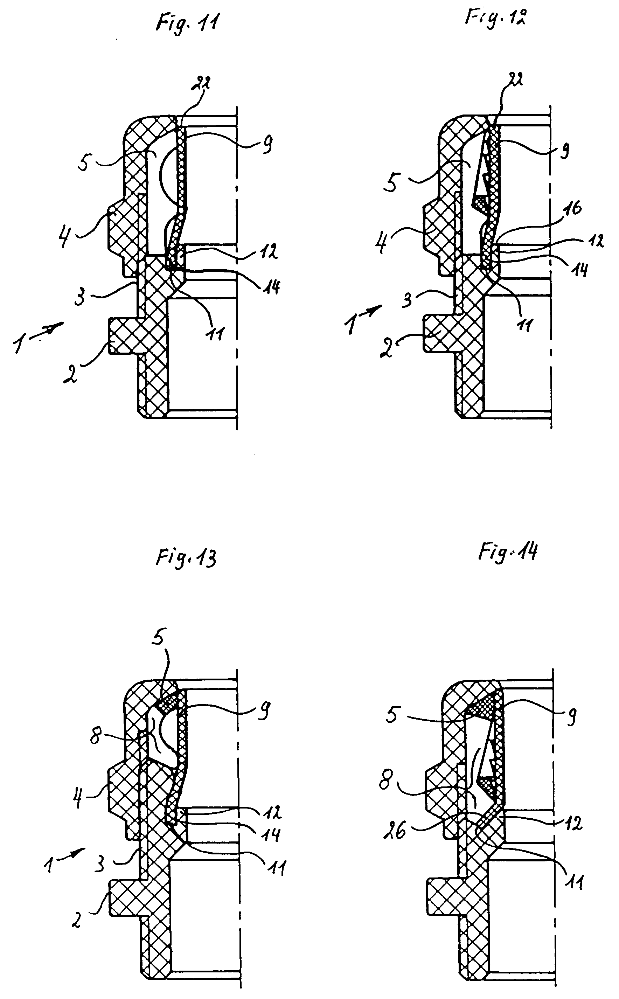

Die Form der Dichtung 9 im Bereich ihrer Abstützung 11 und Übergreifung durch die Haltehülse 12 kann dabei dem ringförmigen Hohlraum zwischen der Haltehülse 12 und der Schraubhülse 2 entsprechend, also als Formdichtung ausgebildet sein. Dies erkennt man deutlich in den Figuren 8 und 10 oder auch in den Figuren 11 bis 14 sowie in einfacher Form in Fig.1 oder 2 oder auch 4. Es wäre aber auch möglich, die entsprechenden Endbereiche der Dichtung 9 an die Form der Kammer 18 beispielsweise des Ausführungsbeispiels nach Fig. 3 anpassen und eine entsprechende Formdichtung zu schaffen, die beim Einsetzen in diese Kammer eingezwängt werden müßte.

In den Figuren 1 und 3 bis 10 wird gezeigt, wie die Dichtigkeit der Kabelverschraubung zwischen Dichteinsatz 9 und Kabeloberfläche entsprechend gesteigert und erhalten werden kann. Dazu ist es notwendig, daß der Klemmeinsatz 5 den Dichteinsatz 9 stirnseitig maximal dreiviertel seiner Wandstärke übergreift, so daß der Dichteinsatz zwar durch die Übergreifung 24 am Davonkriechen gehindert, die Kabeloberfläche aber durch die Übergreifung 24 nicht beschädigt wird.

Nach Fig. 3 bis 7 und 8 und 9 ergibt sich eine weitere Verbesserung dadurch, daß der Dichteinsatz 9 auf seiner der Gegenhülse 4 zugewandten Seite 22 einen Absatz 25 aufweist, welcher mit seinem Ansatz durch die Übergreifung 24 des Klemmeinsatzes 5 hindurchführt und auch beim Abbiegen des Kabels sich schützend zwischen die Klemmfinger 23 des Klemmeinsatzes 5 und der Kabeloberfläche legt, so daß das Kabel nicht beschädigt und der durch die Absetzung gekammerte Dichtwerkstoff auch nicht bei Zugbelastung davonkriechen kann.

**Patentansprüche**

1. Kabelverschraubung (1) mit einer Schraubhülse (2), einer damit vorzugsweise mittels Gewinde (3) verbindbaren Gegenhülse (4) oder dergleichen Druckstück und einem damit oder dadurch gegen das Kabel oder einen Schutzschlauch preßbaren Klemmeinsatz (5) vorzugsweise aus härterem Werkstoff als der Kabelmantel, wobei die Gegenhülse (4) oder dergleichen den Klemmeinsatz (5) mit einer Ringfläche (6) zumindest an der Stirnseite (7) übergreift und beim Anziehen des Gewindes (3) vorzugsweise mit einer sich verjüngenden Form, zum Beispiel mittels eines Konus einen mit axialen, an der Stirnseite (6) mündenden Schlitzes (8) versehenen Bereich des Klemmeinsatzes (5) radial gegen das Kabel oder dergleichen hin verformt, wobei zwischen Klemmeinsatz (5) und Kabel oder dergleichen ein Dichtring oder dergleichen Dichtung (9) angeordnet ist, der von dem Klemmeinsatz (5) gegen das Kabel anpreßbar ist und sich mit seiner der Gegenhülse (4) abgewandten Stirnseite (10) an einem teilweise axial orientierten Absatz oder dergleichen der Schraubhülse (2) abstützt, **dadurch gekennzeichnet**, daß die Schraubhülse (2) in ihrem Inneren im Bereich des Absatzes als Abstützung (11) für die Dichtung (9) eine mit ihr verbundene, konzentrische, gegenüber der Abstützung (11) in axialer Richtung vorstehende Haltehülse (12) hat, die die Innenseite (13) des schraubhülsenseitigen Randbereiches (14) der Dichtung (9) übergreift und am zumindest teilweisen Abrutschen von der Abstützung (11) hindert, und daß die Dichtung (9) durch die aufgrund des Klemmeinsatzes (5) oder von dessen durch in den Hülsenbereich reichenden Schlitzen (8) gebildete Klemmfinger sich aufbauende radiale Druckbelastung an die Wandung der Haltehülse (12) anpreßbar ist.

2. Kabelverschraubung nach Anspruch 1, dadurch gekennzeichnet, daß die Haltehülse (12) mit der Schraubhülse (2) einstückig verbunden ist.

3. Kabelverschraubung nach Anspruch 1 oder 2, dadurch gekennzeichnet, daß der radiale Abstand zwischen der Aussenseite der Haltehülse (12) und der Innenseite der Kabelverschraubung (1) zumindest bereichsweise der Dicke der Dichtung (9) entspricht.

4. Kabelverschraubung nach einem der Ansprüche 1 bis 3, dadurch gekennzeichnet, daß die Dichtung (9) im Bereich der Haltehülse (12) einen Absatz (15) aufweist, der vorzugsweise gegen die Stirnseite (16) der Haltehülse (12) anliegt, und daß die von diesem Absatz (15) ausgehende Fortsetzung (17) der Dichtung (9) zwischen Haltehülse (12) und Schraubhülse (2) greift.

5. Kabelverschraubung nach einem der Ansprüche 1 bis 3, dadurch gekennzeichnet, daß die Dichtung (9) über ihre gesamte Länge im wesentlichen einen gleichbleibenden ringförmigen Querschnitt hat und im Bereich der Haltehülse (12) radial nach außen aufgeweitet ist.

6. Kabelverschraubung nach einem der Ansprüche 1 bis 5, dadurch gekennzeichnet, daß der Außenmantel der Haltehülse (12) konisch ist.

7. Kabelverschraubung nach einem der Ansprüche 1 bis 6, dadurch gekennzeichnet, daß die äußere Mantelfläche der Haltehülse (12) von ihrem Ansatz bzw. dem Abstützbereich (11) für die Dichtung (9) ausgehend von innen nach außen von einem kleineren zu einem größeren Durchmesser ansteigt.

8. Kabelverschraubung nach Anspruch 7, dadurch gekennzeichnet, daß zwischen der Schraubhülse (2) und der Haltehülse (12) eine sich zur Abstützung der Dichtung (9) erweiternde ringförmige Kammer (18) vorgesehen ist.

9. Kabelverschraubung nach einem der Ansprüche 1 bis 8, dadurch gekennzeichnet, daß der Außendurchmesser der Haltehülse (12) sich von der Abstützung (11) der Dichtung (9) ausgehend verkleinert.

10. Kabelverschraubung nach Anspruch 1 oder einem der Ansprüche 3 bis 9, dadurch gekennzeichnet, daß die Haltehülse (12) in die Kabelverschraubung (1) einsetzbar und vorzugsweise an ihrem inneren Absatz (19) der Schraubhülse (2) insbesondere in axialer Richtung formschlüssig festlegbar ist.

11. Kabelverschraubung nach Anspruch 10, dadurch gekennzeichnet, daß die nachträglich in die Schraubhülse einsetzbare Haltehülse (12) aus Kunststoff besteht und insbesondere eine von der Dichtung (9) abgewandte Fortsetzung als Isolierhülse (20) hat.

12. Kabelverschraubung nach Anspruch 10 oder 11, dadurch gekennzeichnet, daß die Haltehülse (12) eine die Dichtung (9) an deren Außenseite umgreifende Fortsetzung (21) hat, die vorzugsweise als Axialschlitze aufweisender Klemmeinsatz (5) ausgebildet ist.

13. Kabelverschraubung nach einem der Ansprüche 1 bis 12, dadurch gekennzeichnet, daß der die Dichtung (9) übergreifende Randbereich der Haltehülse (12) teilweise unter den Klemmbereich des die Dichtung (9) außen beaufschlagenden Klemmeinsatzes (5) ragt.

14. Kabelverschraubung nach einem der Ansprüche 1 bis 13, dadurch gekennzeichnet, daß die Form der Dichtung (9) im Bereich ihrer Abstützung (11) und Übergreifung durch die Haltehülse (12) dem ringförmigen Hohlraum zwischen Haltehülse (12) und Schraubhülse (2) entspricht, also als Formdichtung ausgebildet ist.

15. Kabelverschraubung nach einem der Ansprüche 1 bis 14, dadurch gekennzeichnet, daß die Haltehülse (12) zumindest in ihrem von der Dichtung übergriffenen Bereich durch axiale Schlitze in Klemmzungen oder Klemmfinger aufgeteilt ist.

16. Kabelverschraubung nach einem der Ansprüche 1 bis 15, dadurch gekennzeichnet, daß der Dichteinsatz (9) auf seiner der Auflagefläche (11) zugewandten Seite mit einer sich nach außen erstreckenden ringförmigen Erweiterung (26) versehen ist, über welche der Dichteinsatz (9) vom ihn übergreifenden Klemmeinsatz (5) auf die Auflagefläche (11) gepreßt und festgehalten ist.

17. Kabelverschraubung nach Anspruch 16, dadurch gekennzeichnet, daß die ringförmige Erweiterung (26) des Dichteinsatzes (9) erst bei der Montage durch Aufschieben auf die Haltehülse (12) oder auf die Auflagefläche (11) entsteht.

18. Kabelverschraubung nach einem der Ansprüche 1 bis 17, dadurch gekennzeichnet, daß der Dichteinsatz (9) auf seiner der Gegenhülse (4) zugewandten Stirnseite (22) von den Klemmfingern (23) des Klemmeinsatzes (5) von maximal dreiviertel seiner Wandstärke übergriffen ist.

19. Kabelverschraubung nach einem der Ansprüche 1 bis 18, dadurch gekennzeichnet, daß der Dichteinsatz (9) auf seiner der Gegenhülse (4) zugewandten Seite (22) einen Absatz (25) aufweist, welcher mit seinem Ansatz durch die Übergreifung (24) des Klemmeinsatzes (5) hindurchführt und auch beim Abbiegen des Kabels sich schützend zwischen die Klemmfinger (23) des Klemmeinsatzes (5) und die Kabeloberfläche legt.

**Claims**

1. A screw-threaded cable fitting (1) including a screwed sleeve (2), a counter-sleeve (4) or similar thrust piece connectable thereto preferably by means of thread (3), and a clamping means (5) which is adapted to be pressed therewith or thereby against the cable or a protective tube or hose and is preferably made of harder material than the cable sheath, the counter-sleeve (4) or the like engaging over the clamping means (5) with a ring area (6) at least at the face (7) and, as the thread (3) is tightened, deforming preferably with a tapering shape, e.g. by means of a cone, the clamping means (5) in an area thereof provided with axial slits (8) opening out at the face (6), such deformation taking place radially towards the cable or the like, arranged between clamping means (5) and cable or the like there being a sealing ring or similar seal (9) adapted to be pressed against the cable by the clamping means (5), that face (10) of the sealing ring or similar seal which is averted from the counter-sleeve (4) being supported against a partly axially oriented shoulder or the like of the screwed sleeve (2), **characterized in that** in the area of the shoulder as a support (11) for the seal (9), the screwed sleeve (2) has connected therewith an interior, concentric holding sleeve (12) protruding in the axial direction relative to the support (11), said holding sleeve engaging over the inside (13) of the seal (9) at the edge area (14) thereof in the direction of the screwed sleeve and preventing the same from slipping at least in part from the support (11), and that the seal (9) is adapted to be pressed against the wall of the holding sleeve (12) through the radial pressure load building up on account of the clamping means (5) or clamping fingers thereof formed by slits (8) extending into the sleeve area.

2. A screw-threaded cable fitting as claimed in claim 1, characterized in that the holding sleeve (12) is integrally connected to the screwed sleeve (2).

3. A screw-threaded cable fitting as claimed in claim 1 or claim 2, characterized the radial distance between the outside of the holding sleeve (12) and the inside of the screw-threaded cable fitting (1) corresponds at least in areas to the thickness of the seal (9).

4. A screw-threaded cable fitting as claimed in any one of claims 1 to 3, characterized in that in the area of the holding sleeve (12) the seal (9) has a shoulder (15) preferably resting against the end face (16) of the holding sleeve (12), and that the continuation (17) extending the seal (9) and departing from said shoulder (15) engages between holding sleeve (12) and screwed sleeve (2).

5. A screw-threaded cable fitting as claimed in any one of claims 1 to 3, characterized in that the seal (9) has throughout its length an essentially uniform ring-shaped cross section and is flared radially outwardly in the area of the holding sleeve (12).

6. A screw-threaded cable fitting as claimed in any one of claims 1 to 5, characterized in that the outer surface of the holding sleeve (12) is conical.

7. A screw-threaded cable fitting as claimed in any one of claims 1 to 6, characterized in that the outer surface of the holding sleeve (12) departs from its starting point or support area (11) for the seal (9), ascending from the inside to the outside, from a smaller to a larger diameter.

8. A screw-threaded cable fitting as claimed in claim 7, characterized in that an annular chamber (18) widening to support the seal (9) is provided between the screwed sleeve (2) and the holding sleeve (12).

9. A screw-threaded cable fitting as claimed in any one of claims 1 to 8, characterized in that the outside diameter of the holding sleeve (12) diminishes starting from the support (11) of the seal (9).

10. A screw-threaded cable fitting as claimed in claim 1 or any one of claims 3 to 9, characterized in that the holding sleeve (12) is adapted to be inserted in the screw-threaded cable fitting (1) and preferably to be fixed form-lockingly particularly in the axial direction at an inner shoulder (19) of the screwed sleeve (2).

11. A screw-threaded cable fitting as claimed in claim 10, characterized in that the holding sleeve (12) adapted to be retrofitted in the screwed sleeve consists of plastics and in particular has a continuation which is averted from the seal (9) and serves as an insulating sleeve (20).

12. A screw-threaded cable fitting as claimed in claim 10 or claim 11, characterized in that the holding sleeve (12) has a continuation (21) which embraces the outside of the seal (9) and preferably takes the form of a clamping means (5) having axial slits.

13. A screw-threaded cable fitting as claimed in any one of claims 1 to 12, characterized in that the edge area belonging to the holding sleeve (12) and engaging over the seal (9) partly projects under the clamping area of the clamping means (5) acting on the seal (9) outside.

14. A screw-threaded cable fitting as claimed in any one of claims 1 to 13, characterized in that the shape of the seal (9) in the area of its support (11) and overlap by the holding sleeve (12) corresponds to the annular cavity between holding sleeve (12) and screwed sleeve (2), hence is devised to be a shaped seal.

15. A screw-threaded cable fitting as claimed in any one of claims 1 to 14, characterized in that the holding sleeve (12) is sub-divided into clamping tongues or clamping fingers by axial slits, at least in that area of said holding sleeve over which the seal engages.

16. A screw-threaded cable fitting as claimed in any one of claims 1 to 15, characterized in that the sealing means (9) on the side thereof facing the supporting surface (11) is provided with an outwardly extending annular extension (26), the clamping means (5) engaging over the sealing means (9) pressing and holding the latter fast on the supporting surface (11) by way of said extension (26).

17. A screw-threaded cable fitting as claimed in claim 16, characterized in that the annular extension (26) of the sealing means (9) is formed during assembly by sliding on the holding sleeve (12) or on the support surface (11).

18. A screw-threaded cable fitting as claimed in any one of claims 1 to 17, characterized in that the clamping fingers (23) of the clamping means (5) lap over a maximum of three quarters of the wall thickness of the sealing means (9) at the end face (22) thereof facing the counter-sleeve (4).

19. A screw-threaded cable fitting as claimed in any one of claims 1 to 18, characterized in that on that side (22) of the sealing means (9) which faces the counter-sleeve (4), the sealing means (9) has a shoulder (25) which with its neck passes through the overlap (24) of the clamping means (5) and lies protectively between the clamping fingers (23) of the clamping means (5) and the cable surface even when the cable is bent.

**Revendications**

1. Raccord vissé (1) pour câbles, comportant un mamelon fileté (2), un manchon conjugué (4), ou toute autre pièce de pression, relié au mamelon de préférence par l'intermédiaire d'un filetage (3), ainsi qu'un insert (5) de serrage plaqué contre le câble ou la gaine de blindage à l'aide ou par l'intermédiaire de ce manchon conjugué de pression, l'insert de serrage étant réalisé de préférence en une matière plus dure que l'enveloppe du câble, le manchon conjugué (4) ou similaire encastrant l'insert (5) de serrage au niveau de la face frontale (7) au moins, par l'intermédiaire d'une face annulaire (6), et déformant, lors du serrage de la douille filetée (4) et par l'intermédiaire d'une partie ayant de préférence une forme effilée, par exemple une forme conique, une partie de l'insert (5) de serrage qui est pourvue de fentes axiales (8) débouchant à la facè frontale (6), en déformant radialement cette partie contre le câble ou similaire, et une bague de joint ou tout autre joint (9) d'étanchéité étant disposé entre l'insert (5) de serrage et le câble ou similaire, le joint étant plaqué contre le câble par l'intermédiaire de l'insert (5) de serrage en s'appuyant, par sa face frontale (10) située à l'opposé du manchon conjugué (4), sur un rebord ou similaire, disposé, en partie, axialement sur le mamelon fileté (2), caractérisé en ce que le mamelon fileté (2) possède à l'intérieur, au niveau du rebord, une douille concentrique (12) de maintien, formant un support (11) pour le joint (9) d'étanchéité et étant relié au mamelon fileté en faisant saillie axialement par rapport au support (11), ladite douille (12) de maintien encastrant la face interne (13) de l'extrémité (14) du joint (9) d'étanchéité, qui est située du côté du mamelon fileté, pour l'empêcher de s'échapper, ne serait-ce que partiellement, du support (11), et en ce que le joint (9) d'étanchéité peut être plaqué contre la paroi de la douille (12) de maintien grâce à la compression radiale créée en raison de l'action de l'insert (5) de pression ou de l'action des languettes de serrage de l'insert formées par les fentes (8) débouchant au niveau de la douille.

2. Raccord vissé pour câbles selon la revendication 1, caractérisé en ce que la douille (12) de maintien forme une pièce monobloc avec le mamelon fileté (2).

3. Raccord vissé pour câbles selon la revendication 1 ou 2, caractérisé en ce que la distance radiale entre la face externe de la douille (12) de maintien et la face interne du raccord vissé (1) pour câbles correspond par endroits au moins à l'épaisseur du joint (9) d'étanchéité.

4. Raccord vissé pour câbles selon l'une des revendications 1 à 3, caractérisé en ce que le joint (9) d'étanchéité comporte, au niveau de là douille (12) de maintien, un rebord (15) qui s'appuie, de préférence, sur la face frontale (16) de la douille (12) de maintien, et en ce que le prolongement (17) du joint (9) d'étanchéité, qui s'étend à partir de ce rebord (15), s'engage entre la douille (12) de maintien et le mamelon fileté (2).

5. Raccord vissé pour câbles selon l'une des revendications 1 à 3, caractérisé en ce que le joint (9) d'étanchéité possède une section annulaire restant sensiblement uniforme sur toute sa longueur, qui s'élargit vers l'extérieur au niveau de la douille (12) de maintien.

6. Raccord vissé pour câbles selon l'une des revendications 1 à 5, caractérisé en ce que l'enveloppe extérieure de la douille (12) de maintien est conique.

7. Raccord vissé pour câbles selon l'une des revendications 1 à 6, caractérisé en ce que le diamètre de la surface enveloppante extérieure de la douille (12) de maintien augmente, de l'intérieur vers l'extérieur, depuis un petit diamètre vers un diamètre plus grand, à partir de la base de ladite douille de maintien, voire à partir du support (11) du joint (9) d'étanchéité.

8. Raccord vissé pour câbles selon la revendication 7, caractérisé en ce qu'une chambre annulaire (18) est prévue entre le mamelon fileté (2) et la douille (12) de maintien, cette chambre annulaire ayant une section qui s'élargit vers le support du joint (9) d'étanchéité.

9. Raccord vissé pour câbles selon l'une des revendications 1 à 8, caractérisé en ce que le diamètre extérieur de la douille (12) de maintien diminue à partir du support (11) du joint (9) d'étanchéité.

10. Raccord vissé pour câbles selon la revendication 1 ou l'une des revendications 3 à 9, caractérisé en ce que la douille (12) de maintien peut être rapportée au raccord vissé (1) pour câbles et peut, de préférence, être fixée, notamment dans le sens axial, par engagement géométrique au niveau du rebord intérieur (19) du mamelon fileté (2).

11. Raccord vissé pour câbles selon la revendication 10, caractérisé en ce que la douille (12) de maintien, qui peut être rapportée au mamelon fileté, est réalisée en matière plastique et comporte notamment un prolongement situé à l'opposé du joint (9) d'étanchéité, qui forme une douille (20) d'isolation.

12. Raccord vissé pour câbles selon la revendication 10 ou 11, caractérisé en ce que la douille (12) de maintien comporte un prolongement (21) qui encastre la face externe du joint (9) d'étanchéité, ce prolongement étant réalisé de préférence sous forme d'un insert (5) de serrage pourvu de fentes axiales.

13. Raccord vissé pour câbles selon l'une des revendications 1 à 12, caractérisé en ce que la partie périphérique de la douille (12) de maintien, qui encastre le joint (9) d'étanchéité, s'étend par endroits jusque sous la zone de serrage de l'insert (5) de serrage qui agit extérieurement sur le joint (9) d'étanchéité.

14. Raccord vissé pour câbles selon l'une des revendications 1 à 13, caractérisé en ce que la forme du joint (9) d'étanchéité correspond, au niveau de son support (11) et de la partie encastrée dans la douille (12) de maintien, à la cavité annulaire comprise entre la douille (12) de maintien et le mamelon fileté (2), c'est-à-dire que ledit joint est réalisé sous forme d'un joint profilé.

15. Raccord vissé pour câbles selon l'une des revendications 1 à 14, caractérisé en ce que la douille (12) de maintien est divisée, dans la partie qui recouvre le joint d'étanchéité au moins, en languettes ou doigts de serrage par l'intermédiaire de fentes axiales.

16. Raccord vissé pour câbles selon l'une des revendications 1 à 15, caractérisé en ce que le joint (9) d'étanchéité rapporté comporte un prolongement annulaire (26) faisant saillie vers l'extérieur, disposé sur la face du joint qui est dirigée vers la face de support (11), le joint (9) d'étanchéité étant plaqué sur là face de support (11) et y étant fixé par l'insert (5) de serrage, par l'intermédiaire du dit prolongement annulaire.

17. Raccord vissé pour câbles selon la revendication 16, caractérisé en ce que le prolongement annulaire (26) du joint (9) d'étanchéité n'est créé qu'au moment du montage, par l'emmanchement du joint sur la douille (12) de maintien ou sur la face de support (11).

18. Raccord vissé pour câbles selon l'une des revendications 1 à 17, caractérisé en ce que la face frontale (22) du joint (9) d'étanchéité qui est dirigée vers le manchon conjugué (4), est recouverte par les languettes (23) de serrage de l'insert (5) de serrage au maximum jusqu'aux trois quarts de l'épaisseur de la paroi du joint.

19. Raccord vissé pour câbles selon l'une des revendications 1 à 18, caractérisé en ce que le joint (9) d'étanchéité comporte un rebord (25) disposé sur la face (22) du joint, qui est dirigée vers le manchon conjugué (4), dont la base traverse la zone recouverte (24) par l'insert (5) de serrage, et qui se place, de façon protectrice, entre les languettes (23) de serrage de l'insert (5) de serrage et la surface du câble, même lorsque le câble est plié.

Fig. 1

Fig. 2

Fig.3

Fig.4

Fig. 5

Fig. 6

Fig 6 a.

Fig 7

Fig. 7a

Fig. 8

Fig. 9

Fig. 10

Fig. 11

Fig. 12

Fig. 13

Fig. 14